(19) Europäisches Patentamt
European Patent Office
Office européen des brevets

(11) EP 1 687 596 B1

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **04790999.9**

(22) Anmeldetag: **29.10.2004**

(51) Int Cl.:
**G01F 9/00** *(2006.01)*

(86) Internationale Anmeldenummer:
**PCT/EP2004/012233**

(87) Internationale Veröffentlichungsnummer:
**WO 2005/050146 (02.06.2005 Gazette 2005/22)**

(54) **VERFAHREN ZUR ERMITTLUNG VON KRAFTSTOFFMEHRVERBRAUCH IN EINEM KRAFTFAHRZEUG**

METHOD FOR DETERMINING ADDITIONAL FUEL CONSUMPTION IN A MOTOR VEHICLE

PROCEDE POUR DETERMINER UN SURPLUS DE CONSOMMATION DE CARBURANT DANS UN VEHICULE AUTOMOBILE

(84) Benannte Vertragsstaaten:
**DE FR GB**

(30) Priorität: **17.11.2003 DE 10353689**

(43) Veröffentlichungstag der Anmeldung:
**09.08.2006 Patentblatt 2006/32**

(73) Patentinhaber: **AUDI AG**
**85045 Ingolstadt (DE)**

(72) Erfinder: **STERNER, Quirin**
**85128 Wolkertshofen (DE)**

(74) Vertreter: **Lehle, Josef**
**Audi AG**
**Patentabteilung I/EX**
**85045 Ingolstadt (DE)**

(56) Entgegenhaltungen:
**EP-A- 0 855 579    US-A- 5 336 932**

- **BRODRICK ET AL: "Effects of Engine Speed and Accessory Load on Idling Emissions from Heavy-Duty Truck Engines" JOURNAL OF THE AIR & WASTE MANAGEMENT ASSOCIATION, [Online] Bd. 52, September 2002 (2002-09), Seiten 1026-1031, XP002325027 ISSN: 1047-3289 Gefunden im Internet: URL:www.awma.org/journal/pdfs/2002/9/Brodrick.pdf> [gefunden am 2005-04-18]**
- **PATENT ABSTRACTS OF JAPAN Bd. 2000, Nr. 06, 22. September 2000 (2000-09-22) & JP 2000 088625 A (HANSHIN ELECTRIC CO LTD), 31. März 2000 (2000-03-31)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 687 596 B1

**Beschreibung**

Die vorliegende Erfindung betrifft ein Verfahren zur Ermittlung des Kraftstoffmehrverbrauchs in einem Kraftfahrzeug mit einem Verbrennungsmotor und einem Generator, insbesondere die Ermittlung des Kraftstoffmehrverbrauchs in Abhängigkeit von elektrischen Verbrauchern in dem Kraftfahrzeug. Die Erfindung betrifft weiterhin ein Verfahren zur Anzeige eines so ermittelten Kraftstoffmehrverbrauchs.

Es ist bekannt, in Kraftfahrzeugen den Verbrauch an Kraftstoff zu ermitteln und dem Fahrer anzuzeigen. Ein Verfahren zur Bestimmung des Kraftstoffverbrauchs in Fahrzeugen ist beispielsweise in der europäischen Patentanmeldung EP 1 205 738 A2 beschrieben. Hierbei erfolgt die Berechnung des Kraftstoffverbrauchs mittels des relativen, indizierten, momentanen von der Verbrennungskraftmaschine abgebbaren Moments und einer Mengenkonstante für das indizierte Moment sowie der Abtriebsdrehzahl der Verbrennungskraftmaschine und der Zylinderfüllung pro Umdrehung. Mit diesem Verfahren wird somit der gesamte Kraftstoffverbrauch ermittelt.

Der Kraftstoff, der in dem Kraftfahrzeug verbraucht wird, dient aber unterschiedlichen Zwecken. Zum einen wird durch den Kraftstoff der Motor angetrieben, der wiederum für den Antrieb des gesamten Fahrzeugs über das Getriebe dienen kann, zum anderen wird aber über den Motor auch der Generator angetrieben. Von dem Generator werden elektrische Verbraucher in dem Kraftfahrzeug mit der benötigten Spannung versorgt. Solche elektrischen Verbraucher in einem Kraftfahrzeug können beispielsweise die Klimaanlage oder die Heckscheibenheizung sein. Werden diese Verbraucher in einem Kraftfahrzeug aktiviert, das heißt in der Regel durch den Fahrer angeschaltet, so muss von dem Generator die benötigte Spannung zur Verfügung gestellt werden und dadurch steigt der Kraftstoffverbrauch des Fahrzeugs. Aus US 5,336,932 ist ein Verfahren bekannt, gemäß welchem die Steuerung eines Batterieladestromes in Abhängigkeit eines Motorbetriebszustandes erfolgen soll. Damit soll der durch das Laden der Batterie verursachte zusätzliche Kraftstoffverbrauch reduziert werden. Der Fahrer kann jedoch weder auf das Verfahren Einfluß nehmen, noch erhält er Informationen darüber, daß das Verfahren durchgeführt wird.

Aus der Studie von Brodrick et al, "Effects of Engine Speed and Accessory Load on Idling Emissions from Heavy-Duty Truck Engines", Journal of the Air & Waste Management Association, Bd. 52, Sptember 2002, Seiten 1026-1031, ist es bekannt, daß elektrische Verbraucher an Bord von Lastkraftzügen einen Kraftstoffmehrverbrauch hervorrufen, welcher vom Betriebszustand des jeweiligen Motors abhängt. Es werden einige Zahlenbeispiele für den Mehrverbrauch in Abhängigkeit unterschiedlicher Verbraucherleistungen und unterschiedlicher Motordrehzahlen angegeben. Die Angaben der Verbraucherleistungen sind jedoch exemplarisch, und die Studie dient lediglich dazu, das Bewußtsein dafür schärfen, wie hoch der zusätzliche Kraftstoffverbrauch von Lastkraftzügen ist, welche nur zum Betrieb von Verbrauchern im Leerlauf betrieben werden. Die Studie macht keine Angaben dazu, wie der konkrete Verbrauch eines ausgewählten Verbrauchers bestimmt werden könnte.

Aus Patent Abstracts of Japan Bd. 2000, Nr. 06, 22. September 2000 sowie aus JP 2000 088625 A ist ein Verfahren zur Anzeige des relativen Gesamtkraftstoffverbrauchs eines Kraftfahrzeuges bekannt. Nach Festlegung eines Referenzzeitpunktes wird dem Fahrer eines Kraftfahrzeuges angezeigt, wenn das Kraftfahrzeug mehr oder weniger Kraftstoff verbraucht als zum Referenzzeitpunkt. Mit dem Verfahren ist es jedoch nicht möglich, Rückschlüsse auf die Ursache eines festgestellten Mehr- oder Minderverbrauches zu ziehen.

Durch eine Berechnung des Gesamtkraftstoffverbrauchs, wie diese beispielsweise in der europäischen Patentanmeldung EP 1 205 738 A2 beschrieben ist, kann eine zuverlässige Ermittlung dieses Kraftstoffmehrverbrauchs ebenfalls nicht gewährleistet werden. Insbesondere kann bei dem Verfahren des Stands der Technik nicht sichergestellt werden, dass der Fahrer die Information erhält, dass die Kraftstoffverbrauchserhöhung durch den zusätzlich aktivierten elektrischen Verbraucher hervorgerufen wurde und welchen Betrag diese Kraftstofferhöhung besitzt. Selbst wenn durch das Verfahren des Stands der Technik beim Zuschalten eines elektrischen Verbrauchers eine Steigerung des Kraftstoffverbrauchs erkannt würde und diese durch die Angabe eines höheren Zahlenwerts dem Fahrer zur Kenntnis gebracht würde, so wäre es für den Fahrer nicht ersichtlich, wodurch dieser Erhöhung entstanden ist. Hierbei ist insbesondere zu berücksichtigen, dass der Kraftstoffverbrauch für die Erzeugung der elektrischen Energie zum Antrieb elektrischer Verbraucher im Vergleich zum Gesamtkraftstoffverbrauch relativ gering ist. Eine leichte Steigerung des Kraftstoffverbrauchs könnte von dem Fahrer daher übersehen oder eventuell einer anderen Aktion, wie beispielsweise dem Herunterdrücken des Gaspedals, zugeordnet werden.

Der Erfindung liegt somit die Aufgabe zugrunde, ein Verfahren zur Verfügung zu stellen, mit dem während des Betriebs des Kraftfahrzeugs Werte für den Kraftstoffverbrauch ermittelt werden können, die den Verbrauch, der durch elektrische Verbraucher verursacht wird, genau angeben. Weiterhin sollen diese Werte dem Fahrer des Kraftfahrzeugs in geeigneter Weise zur Verfügung gestellt werden können.

Die Aufgabe wird erfindungsgemäß durch ein Verfahren zur Ermittlung von Kraftstoffmehrverbrauch gemäß Anspruch 1 gelöst. Bei diesem Verfahren wird in einem Kraftfahrzeug mit einem Verbrennungsmotor und einem Generator, der von dem Verbrennungsmotor angetrieben wird, derjenige Mehrstoffverbrauch an Kraftstoff separat ermittelt, der durch einen elektrischen Verbraucher, der mit dem Generator verbunden ist, hervorgerufen wird. Insbesondere wird zur Ermittlung des Kraftstoffmehrverbrauchs zumindest ein aktueller Wert für die Antriebsleistung des Generators berücksichtigt.

Durch die Berücksichtigung des mindestens einen aktuellen Werts für die Antriebsleistung kann der Wirkungsgrad des Generators, der durch die Antriebs- und die Abtriebsleistung definiert ist, genauer festgelegt werden. Die Einbeziehung dieses, über den mindestens einen aktuellen Wert der Antriebsleistung des Generators bestimmten, momentanen Wirkungsgrads des Generators führt dazu, dass auch der Kraftstoffmehrverbrauch genauer bestimmt werden kann. Die Ermittlung unter Berücksichtigung des momentanen tatsächlichen Wirkungsgrads liefert somit bessere Werte als eine Ermittlung, bei der ein gemittelter oder abgeschätzter Wirkungsgrad verwendet wird.

Vorzugsweise werden zur Bestimmung des Kraftstoffmehrverbrauchs Werte für die elektrische Antriebsleistung des Generators zu unterschiedlichen Zeitpunkten bestimmt. Bei der Verwendung mehrerer Werte der elektrischen Antriebsleistung, die für unterschiedliche Zeitpunkte bestimmt wurden, kann mittels Differenzbildung zwischen diesen Werten sichergestellt werden, dass der Wirkungsgrad, der der Kraftstoffmehrverbrauchsberechnung zugrunde gelegt wird, den Wirkungsgrad des Generators wiedergibt, mit dem die Differenzleistung zwischen zweier der gemessenen Leistungswerten erzeugt wird. Dieser unterscheidet sich von dem Gesamtwirkungsgrad des Generators. Durch die Berücksichtigung des Wirkungsgrads für die Differenzleistung wird die Bestimmung des Kraftstoffmehrverbrauchs weiter präzisiert.

In einer bevorzugten Ausführungsform des Verfahrens wird die elektrische, Antriebsleistung des Generators für einen ersten Zeitpunkt und einen zeitlich danach liegenden zweiten Zeitpunkt ermittelt, wobei der erste Zeitpunkt dem Anschaltzeitpunkt eines elektrischen Verbrauchers entspricht.

Wird die elektrische Antriebsleistung zu dem Zeitpunkt, zu dem ein elektrischer Verbraucher zugeschaltet wird, gemessen und ein zweiter Wert, der die elektrische Antriebsleistung während des Betriebs des elektrischen Verbrauchers darstellt, ermittelt, so kann daraus die Information erhalten werden, um wieviel die elektrische Antriebsleistung des Generators durch den elektrischen Verbraucher gestiegen ist. Es wird somit möglich, auch beim Zuschalten eines elektrischen Verbrauchers zu einem Zeitpunkt, zu dem bereits ein anderer elektrischer Verbraucher aktiviert ist, den Kraftstoffmehrverbrauch, der durch den zuletzt zugeschalteten Verbraucher hervorgerufen wird, zu bestimmen.

Gemäß einer Ausführungsform kann die elektrische Antriebsleistung des Generators für die Berechnung des Kraftstoffverbrauchs über ein Generatormodell ermittelt werden. In ein solches Modell können momentane Umgebungsbedingungen und der momentane Zustand des Kraftfahrzeugs einbezogen werden. Hierdurch wird die Bestimmung des Werts der elektrischen Antriebsleistung noch genauer. Das Generatormodell kann in dem Motorsteuergerät des Kraftfahrzeugs abgelegt sein.

Alternativ oder zusätzlich können Werte, die für die Bestimmung der elektrischen Antriebsleistung notwendig sind, aus Kennlinien ermittelt werden. Diese Werte können in das Generatormodell einbezogen werden, oder die elektrische Antriebsleistung wird unmittelbar aus einem Kennlinienfeld ausgelesen. Die Kennlinienfelder können ebenfalls von dem Motorsteuergerät abgelegt sein.

Vorzugsweise werden bei dem erfindungsgemäßen Verfahren mechanische und elektrische Verluste berücksichtigt. Durch die Einbeziehung von auftretenden Verlusten kann erneut die Bestimmung der elektrischen Antriebsleistung des Generators und dadurch die Kraftverbrauchsbestimmung genauere Werte liefern. Auch die Werte für die Verlustleistung können aus Kennlinienfeldern entnommen werden oder durch ein Generatormodell berechnet werden.

Als Eingangsgrößen für ein Generatormodell können beispielsweise die Motordrehzahl, die Umgebungstemperatur, das Übersetzungsverhältnis, die Bordnetzspannung sowie der Erregerstrom des Generators berücksichtigt werden. Aus diesen Eingangsgrößen sowie gegebenenfalls weiteren Größen kann die elektrische Abtriebsleistung des Generators sowie die gesamte Verlustleistung (mechanische, elektrische und thermische Verlustleistung) ermittelt werden.

Gemäß einem weiteren Aspekt betrifft die Erfindung ein Verfahren zum Anzeigen des erfindungsgemäß ermittelten Kraftstoffverbrauchs in einem Kraftfahrzeug, wobei der Kraft-stoffmehrverbrauch, der von einem elektrischen Verbraucher an Bord des Kraftfahrzeugs hervorgerufen wird, separat angezeigt wird.

Die Anzeigevorrichtung kann hierbei eine digitale oder Zeiger-Anzeigevorrichtung darstellen, wobei unter separater Anzeige verstanden wird, dass der Kraftstoffmehrverbrauch gesondert vom Gesamtkraftstoffverbrauch angezeigt wird. Diese separate Anzeige kann mittels der gleichen Anzeigevorrichtung, die für den Gesamtverbrauch verwendet wird, erfolgen.

In einer bevorzugten Ausführungsform wird der Kraftstoffmehrverbrauch zusammen mit einer Angabe über den elektrischen Verbraucher, durch der der Kraftstoffmehrverbrauch hervorgerufen wird, angezeigt.

Hierdurch wird die Möglichkeit geschaffen, dem Fahrer Informationen darüber zu geben, wieviel Kraftstoff die von ihm betätigte elektrische Vorrichtung in dem Kraftfahrzeug verbraucht. Dem Fahrer wird dadurch die Wahl überlassen, ob dieser zusätzliche Kraftstoffverbrauch akzeptabel ist oder ob das elektrische Gerät abgeschaltet werden soll.

In einer Ausführungsform des Anzeigeverfahrens wird der Wert des Kraftstoffmehrverbrauchs über das erfindungsgemäße Ermittlungsverfahren bestimmt und der Anzeigevorrichtung zugeführt.

Die Vorteile und Merkmale, die bezüglich des Verfahrens zur Ermittlung des Kraftstoffverbrauchs beschrieben wurden, gelten, soweit anwendbar, auch für das Verfahren zur Anzeige des Kraftstoffmehrverbrauchs.

Die vorliegende Erfindung wird anhand der beiliegenden Figur im Folgenden genauer beschrieben.

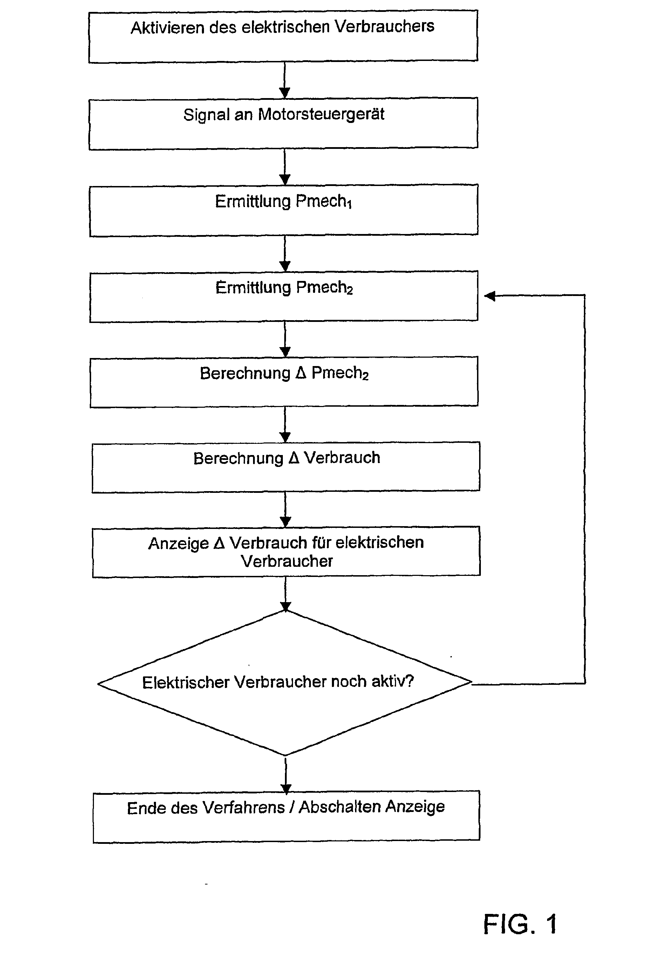

Die Figur 1 zeigt ein Flussdiagramm über den Verfahrensablauf einer Ausführungsform des erfindungsgemäßen Verfahrens.

Wird bei laufendem Verbrennungsmotor eines Kraftfahrzeugs ein elektrischer Verbraucher, beispielsweise die Heizung für die Heckscheibe, angeschaltet, so wird ein Signal an das Motorsteuergerät übertragen. Aufgrund dieses Signals wird die Ermittlung des Kraftstoffmehrverbrauchs initiiert. Hierzu wird zunächst die elektrische Antriebsleistung $Pmech_1$ für den Zeitpunkt, zu dem der elektrische Verbraucher zwar eingeschaltet, aber noch nicht aktiviert d.h. mit Strom versorgt wurde, berechnet. Zu einem zweiten Zeitpunkt, der beispielsweise ein paar Sekunden oder Minuten nach dem Anschaltzeitpunkt liegen kann, wird dann die elektrische Antriebsleistung $Pmech_2$ des Generators berechnet. Aus diesen beiden Werten wird die Differenzleistung $\Delta Pmech$ berechnet.

Aus diesem Wert wird dann der Unterschied im Kraftstoffverbrauch, das heißt der Kraftstoffmehrverbrauch, ermittelt. Dieser Wert wird einer Anzeigevorrichtung zugeführt, über die der Kraftstoffmehrverbrauch dem Fahrer angezeigt wird. Anschließend wird von dem Motorsteuergerät überprüft, ob der elektrische Verbraucher sich noch in dem aktiven Zustand befindet, das heißt noch angeschaltet ist. Ist dies der Fall, so wird in der dargestellten Ausführungsform erneut ein Wert für die elektrische Antriebsleistung $Pmech_2$ für einen weiteren Zeitpunkt ermittelt und, wie bereits im ersten Verfahrenszyklus die Differenz zu dem Anfangswert der elektrischen Antriebsleistung bestimmt. Der mit diesem erneut berechnete Wert ermittelte Kraftstoffmehrverbrauch wird dann an die Anzeigevorrichtung geleitet und dem Fahrer zur Ansicht gebracht. Wird von dem Motorsteuergerät allerdings festgestellt, dass das elektrische Gerät nicht mehr aktiv ist, so wird das Verfahren beendet.

Die Ermittlung der elektrischen Antriebsleistung Pmech kann auf unterschiedliche Arten erfolgen. Zum einen kann die elektrische Antriebsleistung des Generators bestimmt werden durch die Summe der elektrischen Abtriebsleistung und der Verlustleistung, gemäß der Formel:

$$P_{mech} = P_{el} + P_{Verlust}$$

Die für diese Berechnung notwendigen Werte können wahlweise mittels eines Generatormodells erhalten werden und/oder aus Kennlinien entnommen werden.

Bei einem möglichen Generatormodell werden als Eingangsgrößen die Generatordrehzahl, die Bordnetzspannung, der Erregerstrom des Generators, die Umgebungstemperatur und das Übersetzungsverhältnis verwendet. Hierbei kann die Generatordrehzahl aus der Motordrehzahl und dem Übersetzungsverhältnis, das beispielsweise 2,4 beträgt, ermittelt werden. Dieser Wert wird durch das Motorsteuergerät oder über den CAN-Bus zur Verfügung gestellt. Es ist auch möglich, das df-Signal (dynamic field signal) in das Generatormodell einzubeziehen. Dieses gibt die Generatorauslastung wieder und wird für die Berechnung des Ausgangsstroms des Generators benötigt. Die weiterhin für die Bestimmung der Leistung notwendige Generatorspannung kann beispielsweise berechnet werden über die Batteriespannung, den Widerstand durch Leitungsverlust sowie den Strom, der durch den Leitungswiderstand fließt. Aus einem solchen Generatormodell können die Werte für die elektrische Abtriebsleistung des Generators sowie die gesamte Verlustleistung erhalten werden. Mit einem Generatormodell können beispielsweise die Bürstenverluste, die Eisenverluste, die Magnetverluste, die Diodenverluste, die mechanischen Verluste in Abhängigkeit der Drehzahl des Generators und die Lagerverluste, die sich über den Wirkungsgrad des Riemenantriebs bestimmen lassen, berücksichtigt werden.

Alternativ können die Werte für die Generatorabtriebsleistung sowie für die Verlustleistung aus Kennlinienfeldern entnommen werden.

Weiterhin ist es auch möglich, die Generatorantriebsleistung mittels Werten zu bestimmen, die für den Generator gemessen bzw. aus Kennlinienfeldern ermittelt wurden. Hierzu können das Generatordrehmoment sowie die Generatordrehzahl als Einflussgrößen verwendet werden. Diese Werte werden durch das Motorsteuergerät ermittelt oder stehen über Tabellen zur Verfügung.

Zur Berechnung des Kraftstoffmehrverbrauchs, der durch diese Mehrleistung hervorgerufen wird, wird von der Tatsache ausgegangen, dass der Wirkungsgrad des Generators den Quotienten aus der Abtriebsleistung und der Antriebsleistung darstellt. Hieraus folgt, dass der Kraftstoffmehrverbrauch direkt proportional zu der Antriebsmehrleistung des Generators ist und beispielsweise über die folgende Formel berechnet werden kann:

$$\Delta Verb = \Delta Pel / \eta \quad * k * 100/v \quad = \quad \Delta Pmech * k * 100/v$$

wobei:

$\Delta$Verb: Kraftstoffmehrverbrauch in l / 100km
$\Delta$Pel: Abtriebsmehrleistung des Generators in kW
$\Delta$Pmech: Antriebsmehrleistung des Generators in kW
$\eta$ : Wirkungsgrad des Generators
k : Proportionalitätsfaktor in l / (h * kW)
v : Fahrzeuggeschwindigkeit in km / h

Der Proportionalitätsfaktor, der einen Mittelwert für den Verbrauch für die effektive Leistung für alle Motoren bei einer Drehzahl bis beispielsweise 4000 l/min darstellen kann, und für Otto-Motoren beispielsweise unter Verwendung der sogenannten Willans-Linien zu 0,264 l / h pro kW und für TDI-Motoren beispielsweise 0,208 l / h pro kW bestimmt wurde, kann aus Tabellen entnommen werden, oder über Kennlinienfelder und Mittlungsverfahren erhalten werden.
Die vorliegende Erfindung ist nicht auf die dargestellte Ausführungsform des Verfahrens und die beschriebenen Berechnungsarten beschränkt.
Im Rahmen der Erfindung können auch andere Berechnungsverfahren für den Kraftstoffmehrverbrauch verwendet werden, solange diese den momentanen Zustand des Kraftfahrzeugs hinreichend berücksichtigen. Insbesondere muss der zumindest ein aktueller Wert der elektrischen Antriebsleistung des Generators in die Berechnung einfließen.
Weiterhin ist es auch möglich, beispielsweise den Kraftstoffmehrverbrauch für mehrere elektrische Verbraucher zu ermitteln. Dies ist in der Regel nur dann möglich, wenn diese nacheinander zugeschaltet werden. Bei dieser Ausführungsform wird ein erster Wert für die elektrische Antriebsleistung für den Anschaltzeitpunkt des ersten und einen weiteren, nach diesem Zeitpunkt liegenden Zeitpunkt bestimmt. Eine weitere Überprüfung des Kraftstoffmehrverbrauchs nach einem weiteren Zeitintervall erfolgt dann nicht. Wird ein weiterer elektrischer Verbraucher zugeschaltet, so wird für diesen auf die gleiche Weise der Kraftstoffmehrverbrauch bestimmt. Soll der Kraftstoffmehrverbrauch zu mehreren Zeitpunkten während des Betriebs des elektrischen Verbrauchers überprüft werden, so wird vor der Bestimmung der Antriebsleistung des Generators zunächst überprüft, ob seit dem letzen Zeitpunkt der Bestimmung ein weiterer Verbraucher aktiviert wurde.
In einer weiteren Ausführungsform wird der Kraftstoffmehrverbrauch für einen elektrischen Verbraucher außer unmittelbar nach dem Anschalten auch bei jeder Änderung der Betriebsbedingungen ermittelt und angezeigt. Diese Änderung kann beispielsweise die Wahl einer höheren Stufe bei einer Klimaanlage sein.
Für die Anzeige des Kraftstoffmehrverbrauchs können herkömmliche Anzeigevorrichtungen, wie diese in dem Armaturenbrett des Kraftfahrzeugs vorgesehen sind, verwendet werden. Vorzugsweise wird eine digitale Anzeigevorrichtung verwendet. Mittels einer solchen Anzeigevorrichtung besteht nämlich die Möglichkeit, den Kraftstoffverbrauch, der durch einzelne elektrische Verbraucher hervorgerufen wird, separat anzuzeigen und gegebenenfalls dem Fahrer zusätzlich die Information zu geben, für welchen elektrischen Verbraucher der Kraftstoffmehrverbrauch momentan angezeigt wird. So kann beispielsweise auf der Anzeigevorrichtung angegeben werden, Heckscheibe: 0,5 l pro 100 km.
Mit dem erfindungsgemäßen Verfahren wird somit die Möglichkeit geschaffen, dem Fahrer eines Kraftfahrzeugs während des Betriebs des Kraftfahrzeugs Informationen zur Verfügung zu stellen, wieviel Kraftstoff von einzelnen elektrischen Geräten an Bord des Kraftfahrzeugs verbraucht wird. Diese Information erlaubt es dem Fahrer, die Entscheidung zu treffen, ob der Kraftstoffmehrverbrauch in Kauf genommen werden soll, oder ob das elektrische Gerät abgeschaltet werden soll. Dadurch kann eine Belastung der Umwelt gesenkt werden, da einige elektrische Geräte von Fahrern in der Regel nicht oder zumindest weniger häufig und lang verwendet werden würden, wenn diesen der zusätzliche Kraftstoffverbrauch bekannt wäre.

**Patentansprüche**

1. Verfahren zur Ermittlung von Kraftstoffmehrverbrauch in einem Kraftfahrzeug mit einem Verbrennungsmotor und einem Generator, der von dem Verbrennungsmotor angetrieben wird, **dadurch gekennzeichnet, dass** derjenige Mehrverbrauch an Kraftstoff separat ermittelt wird, der durch einen elektrischen Verbraucher, der mit dem Generator verbunden ist, erzeugt wird, wobei zur Ermittlung des Kraftstoffmehrverbrauchs zumindest ein aktueller Wert der Generatorantriebsleistung berücksichtigt wird.

2. Verfahren gemäß Anspruch 1, **dadurch gekennzeichnet, dass** das Verfahren die Bestimmung der elektrischen Antriebsleistung des Generators zu unterschiedlichen Zeitpunkten umfasst.

3. Verfahren gemäß Anspruch 1 oder 2, **dadurch gekennzeichnet, dass** die elektrische Antriebsleistung zu einem ersten Zeitpunkt und einem zeitlich danach liegenden zweiten Zeitpunkt ermittelt wird, wobei der erste Zeitpunkt im Bereich des Anschaltzeitpunkts eines elektrischen Verbrauchers liegt, insbesondere kurz vor dessen Bestromung liegt.

4. Verfahren gemäß einem der Ansprüche 1 bis 3, **dadurch gekennzeichnet, dass** die elektrische Antriebsleistung mittels eines Generatormodells ermittelt wird.

5. Verfahren gemäß einem der Ansprüche 1 bis 4, **dadurch gekennzeichnet, dass** die elektrische Antriebsleistung mittels Werten aus Kennlinienfeldern ermittelt wird.

6. Verfahren nach einem der Ansprüche 1 bis 5, **dadurch gekennzeichnet, dass** bei der Bestimmung des Wertes für die Antriebsleistung an dem Generator mechanische und elektrische Verluste berücksichtigt werden.

7. Verfahren nach einem der Ansprüche 1 bis 6, **dadurch gekennzeichnet, dass** für das Generatormodell als Eingangsgrößen zumindest die Motordrehzahl, die Umgebungstemperatur, das Übersetzungsverhältnis, die Bordnetzspannung sowie der Erregerstrom des Generators verwendet werden.

8. Verfahren zum Anzeigen des gemäß einem Verfahren nach einem der Ansprüche 1 bis 7 ermittelten Kraftstoffmehrverbrauchs, wobei der Kraftstoffmehrverbrauch, der durch einen elektrischen Verbraucher an Bord des Kraftfahrzeugs hervorgerufen wird, separat angezeigt wird.

9. Anzeigeverfahren nach Anspruch 8, **dadurch gekennzeichnet, dass** der Kraftstoffmehrverbrauch zusammen mit einer Angabe über den elektrischen Verbraucher, durch den der Kraftstoffverbrauch hervorgerufen wird, angezeigt wird.

10. Anzeigeverfahren nach einem der Ansprüche 8 oder 9, **dadurch gekennzeichnet, dass** der Wert des Kraftstoffmehrverbrauchs einer Anzeigevorrichtung zugeführt wird.

**Claims**

1. Method for identifying increased fuel consumption in a motor vehicle having an internal combustion engine and a generator which is driven by the internal combustion engine, **characterized in that** the increased consumption of fuel which is created by an electrical load which is connected to the generator is identified separately, with at least one actual value for the generator drive power being taken into consideration in order to identify the increased fuel consumption.

2. Method according to Claim 1, **characterized in that** the method comprises determining the electrical drive power of the generator at different times.

3. Method according to Claim 1 or 2, **characterized in that** the electrical drive power is identified at a first time and a second time which follows the said first time, with the first time being in the region of the connection time of an electrical load, in particular shortly before power is supplied to the said electrical load.

4. Method according to one of Claims 1 to 3, **characterized in that** the electrical drive power is identified by means of a generator model.

5. Method according to one of Claims 1 to 4, **characterized in that** the electrical drive power is identified by means of values from families of characteristic curves.

6. Method according to one of Claims 1 to 5, **characterized in that** mechanical and electrical losses are taken into consideration when the value for the drive power at the generator is determined.

7. Method according to one of Claims 1 to 6, **characterized in that** at least the engine rotation speed, the ambient temperature, the transmission ratio, the on-board electrical system voltage and the field current of the generator are used as input variables for the generator model.

8. Method for displaying the increased fuel consumption which is identified according to a method according to one of Claims 1 to 7, with the increased fuel consumption which is caused by an electrical load on board the motor vehicle being displayed separately.

9. Display method according to Claim 8, **characterized in that** the increased fuel consumption is displayed together with information about the electrical load which caused the fuel consumption.

10. Display method according to Claim 8 or 9, **characterized in that** the value of the increased fuel consumption is supplied to a display apparatus.

**Revendications**

1. Procédé pour déterminer une consommation de carburant excessive dans un véhicule automobile comprenant un moteur à combustion interne et un générateur entraîné par le moteur à combustion interne, **caractérisé en ce que** la consommation excessive de carburant, qui est produite par un consommateur électrique connecté au générateur, est déterminée séparément, au moins une valeur actuelle de la puissance d'entraînement du générateur étant prise en compte pour déterminer la consommation de carburant excessive.

2. Procédé selon la revendication 1, **caractérisé en ce que** le procédé inclut la détermination de la puissance d'entraînement électrique du générateur à différents instants.

3. Procédé selon la revendication 1 ou 2, **caractérisé en ce que** la puissance d'entraînement électrique est déterminée à un premier instant et à un deuxième instant situé plus tard, le premier instant se trouvant dans la plage de l'instant de branchement d'un consommateur électrique, notamment juste avant qu'il soit alimenté en courant.

4. Procédé selon l'une quelconque des revendications 1 à 3, **caractérisé en ce que** la puissance d'entraînement électrique est déterminée au moyen d'un modèle de générateur.

5. Procédé selon l'une quelconque des revendications 1 à 4, **caractérisé en ce que** la puissance d'entraînement électrique est déterminée au moyen de valeurs de champs caractéristiques.

6. Procédé selon l'une quelconque des revendications 1 à 5, **caractérisé en ce que** lors de la détermination de la valeur pour la puissance d'entraînement, on tient compte de pertes mécaniques et électriques au niveau du générateur.

7. Procédé selon l'une quelconque des revendications 1 à 6, **caractérisé en ce que** pour le modèle de générateur, on utilise comme grandeurs d'entrée au moins le régime du moteur, la température environnante, le rapport de transmission, la tension du réseau de bord ainsi que le courant excitateur du générateur.

8. Procédé pour afficher la consommation de carburant excessive déterminée selon un procédé selon l'une quelconque des revendications 1 à 7, dans lequel la consommation de carburant excessive, qui est provoquée par un consommateur électrique à bord du véhicule automobile, est indiquée séparément.

9. Procédé d'affichage selon la revendication 8, **caractérisé en ce que** la consommation de carburant excessive est indiquée conjointement avec une indication du consommateur électrique à l'origine de la consommation de carburant.

10. Procédé d'affichage selon l'une quelconque des revendications 8 ou 9, **caractérisé en ce que** la valeur de la consommation de carburant excessive est acheminée à un dispositif d'affichage.

```
┌─────────────────────────────────────────┐
│   Aktivieren des elektrischen Verbrauchers │
└─────────────────────────────────────────┘
                    │
                    ▼
┌─────────────────────────────────────────┐
│        Signal an Motorsteuergerät         │
└─────────────────────────────────────────┘
                    │
                    ▼
┌─────────────────────────────────────────┐
│          Ermittlung Pmech₁                │
└─────────────────────────────────────────┘
                    │
                    ▼
┌─────────────────────────────────────────┐
│          Ermittlung Pmech₂                │◄──────┐
└─────────────────────────────────────────┘       │
                    │                              │
                    ▼                              │
┌─────────────────────────────────────────┐       │
│         Berechnung Δ Pmech₂               │       │
└─────────────────────────────────────────┘       │
                    │                              │
                    ▼                              │
┌─────────────────────────────────────────┐       │
│          Berechnung Δ Verbrauch           │       │
└─────────────────────────────────────────┘       │
                    │                              │
                    ▼                              │
┌─────────────────────────────────────────┐       │
│   Anzeige Δ Verbrauch für elektrischen    │       │
│              Verbraucher                  │       │
└─────────────────────────────────────────┘       │
                    │                              │
                    ▼                              │
            ◇ Elektrischer Verbraucher            │
              noch aktiv? ─────────────────────────┘
                    │
                    ▼
┌─────────────────────────────────────────┐
│  Ende des Verfahrens / Abschalten Anzeige │
└─────────────────────────────────────────┘
```

Ermittlung $Pmech_1$

Ermittlung $Pmech_2$

Berechnung $\Delta\ Pmech_2$

**FIG. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1205738 A2
- US 5336932 A

- JP 2000088625 A

**In der Beschreibung aufgeführte Nicht-Patentliteratur**

- **Brodrick et al.** Effects of Engine Speed and Accessory Load on Idling Emissions from Heavy-Duty Truck Engines. *Journal of the Air & Waste Management Association,* September 2002, vol. 52, 1026-1031

- *Patent Abstracts of Japan,* 22. September 2000, vol. 2000 (06